## Europäisches Patentamt
## European Patent Office
## Office européen des brevets

(19)

(11) Veröffentlichungsnummer: **0 097 856**
A1

(12)

# EUROPÄISCHE PATENTANMELDUNG

(21) Anmeldenummer: **83105695.7**

(22) Anmeldetag: **10.06.83**

(51) Int. Cl.³: **B 01 D 25/12**
**B 01 D 29/02**

(30) Priorität: **19.06.82 DE 3222989**

(43) Veröffentlichungstag der Anmeldung:
**11.01.84 Patentblatt 84/2**

(84) Benannte Vertragsstaaten:
**AT BE FR GB IT NL**

(71) Anmelder: **Grau Feinwerktechnik GmbH & Co.**
**Eschenstrasse 3**
**D-7926 Böhmenkirch(DE)**

(72) Erfinder: **Linser, Jörg, Prof. Dipl.-Ing.**
**Im Bürglesbühl 23**
**D-7072 Heubach/Lautern(DE)**

(74) Vertreter: **Lorenz, Werner, Dipl.-Ing.**
**Fasanenstrasse 7**
**D-7920 Heidenheim(DE)**

(54) **Plattenfilter.**

(57) Ein Plattenfilter weist eine Vielzahl von über eine Preßeinrichtung zusammenpressbaren und Filterkammern aufweisenden Filterplatten (1) auf, zwischen denen ein Filterband hindurchgeführt und über Umlenkrollen umgelenkt ist. Das Filterband ist in eine Vielzahl von einzelnen miteinander verbundenen Bandsegmenten (4) aufgeteilt, deren Abmessungen in Länge und Breite wenigstens annähernd so groß sind wie die der Filterplatte (1). Wenigstens auf einer Seite, vorzugsweise auf beiden Läangsseiten, des Filterbandes ist ein mit Bandsegmenten verbundenes angetriebenes Zugmittel (5) angeordnet.

Fig.1

EP 0 097 856 A1

0097856

Heidenheim, 13.05.1982 - ph

Akte: GR 904

Anmelder:

=========


Grau Feinwerktechnik

GmbH & Co.

7926 Böhmenkirch


Plattenfilter

=============


Die Erfindung betrifft einen Plattenfilter mit einer Vielzahl von über eine Preßeinrichtung zusammenpressbaren und Filterkammern aufweisenden Filterplatten, zwischen denen ein endloses Filterband hindurchgeführt und über Umlenkrollen umgelenkt ist, wobei die Filterplatten durch Öffnen der Preßeinrichtung zum Abtransport des Filterkuchens auf Abstand bringbar sind.

Ein Plattenfilter dieser Art ist z.B. in der DE-OS
24 21 781 und der GB-OS 2 064 973 beschrieben. Dabei
liegen eine Vielzahl von Filterplatten im allgemeinen
horizontal übereinander und die Filtrierung erfolgt
durch das endlose Filterband. Zum Entfernen des Filterkuchens werden die Filterplatten voneinander getrennt
und durch eine entsprechende Verschiebung des Filterbandes wird der auf dem Filterband liegende Filterkuchen seitlich herausgefahren und kann damit abgenommen
werden oder an den Umlenkrollen abfallen.

Nachteilig bei den bekannten Endlosfilterbändern ist jedoch, daß während des Betriebes durch die vorhandenen
Temperaturen und die Zugbeanspruchung  Bandverlängerungen
von ca. 10% auftreten können. Dies bedeutet bei einer
Bandlänge von 50 m einen Zuwachs von 5 m. Dieser Zuwachs
kann nicht in jedem Fall von der Bandnachspannvorrichtung
aufgenommen werden, weshalb das Band unter Umständen sogar gekürzt und neu vernäht werden muß.

Ein weiterer Nachteil besteht darin, daß unterschiedliche
Längungen über den Bandquerschnitt auftreten können, die
zu einem seitlichen Abdriften des Bandes führen können.
Ein derartiges Abdriften muß aus diesem Grunde durch eine
gesonderte Bandführstation, z.B. über hydraulisch betätige Regelungsvorgänge, ausgeglichen werden.

Ein weiterer Nachteil bei bekannten Filterbändern besteht darin, daß die Krafteinleitung in die Filterbänder sehr ungünstig ist, weil jeder Bandquerschnitt
die gesamten am Band wirkenden Zugkräfte aufnehmen muß.
Diese Einleitung der Zugkraft kann dabei nur über einen
Reibschluß zwischen einer Trommel und dem Filterband erfolgen, weshalb zur Einleitung der erforderlichen hohen
Kräfte teilweise große Umschlingungswinkel und  große Vorspannungen erforderlich sind.

Nachteilig ist weiterhin, daß bei einer Beschädigung des
Filterbandes an irgendeiner Stelle das gesamte Band im
allgemeinen in aufwendiger und zeitraubender Arbeit ausgetauscht werden muß.

Der vorliegenden Erfindung liegt daher die Aufgabe zugrunde
einen Plattenfilter der eingangs erwähnten Art zu schaffen,
der eine einfache und saubere Bandführung besitzt, wobei
das Filterband gleichzeitig auf einfache Weise bei Bedarf
austauschbar sein soll.

Erfindungsgemäß wird diese Aufgabe durch die im kennzeichnenden Teil des Anspruches 1 genannten Merkmale gelöst.

Ein sehr entscheidender Vorteil der erfindungsgemäßen Aufteilung des Filterbandes in eine Vielzahl von Bandsegmenten liegt darin, daß bei Beschädigungen oder bei einem wechselnden Produkt der Austausch der einzelnen Bandsegmente im Vergleich zu dem Austausch eines einheitlichen Filterbandes wesentlich einfacher ist.

Dadurch daß die zum Bewegen eines Bandsegmentes erforderliche Zugkraft über ein seitlich gesondert damit verbundenes und mitlaufendes Zugmittel erfolgt, ist die Bandbeanspruchung geringer. Es wird nur jeweils die zum Bewegen eines Bandsegmentes erforderliche Zugkraft eingeleitet und zu große Bandlängungen werden damit vermieden.

Es läuft somit ebenfalls im       Zickzack zwischen den Filterplatten außerhalb von diesen auf einer Seite - vorzugsweise jedoch für einen gleichmäßigen Transport auf beiden Längsseiten-ein Zugmittel, das von einer zentralen Antriebseinrichtung aus in Umlauf gebracht werden kann.

Von Vorteil ist es dabei, wenn die Zugmittel durch
Querstäbe miteinander verbunden sind. Damit wird eine
gleichmäßige Zugkraft sichergestellt.

Die Querstäbe können dabei die Zugstäbe für die Bandsegmente bilden, an denen diese eingehängt sind, wobei
diese jeweils an deren vorderen Enden angebracht sind,
während die hinteren Enden jeweils federnd gespannt
sind. Durch diese Zugstäbe werden bei einem geöffneten
Plattenfilter dann die Bandsegmente durch den entstandenen
Freiraum zwischen den Filterplatten hindurchgeschleppt.

Durch die Befestigung der einzelnen Bandsegmente an den
Zugstäben und der federnden Einspannung können unterschiedliche Längen von Zugmittelsträngen und Bandsegment
ausgeglichen werden.

Dadurch daß die einzelnen Bandsegmente durch die fest
mit den Zugmitteln verbundenen Zugstäbe exakt geführt sind,
tritt kein seitliches Abdriften mehr auf, denn die
parallel laufenden Zugmittelstränge übernehmen die
Führungsfunktion.

In einfacher Weise können die hinteren Enden der Bandsegmente jeweils an einem Querstab befestigt sein, welcher über Federn an einer mit den Zugmitteln verbundenen
Spanneinrichtung eingehängt ist, wobei die Spanneinrichtung zur Vereinfachung der Zugstab des nachfolgenden
Bandsegmentes sein kann.

Selbstverständlich sind jedoch im Rahmen der Erfindung
auch noch andere Spanneinrichtungen möglich. Wesentlich
ist lediglich, daß die einzelnen Bandsegmente am vorderen
Ende an fest mit den Zugmitteln verbundene Zugstäbe
eingehängt sind und am hinteren Ende gespannt werden.

Als Zugmittel können die verschiedensten Einrichtungen
dienen. So sind z.B. Seile, Bänder, Ketten oder dgl.
möglich. Bei Verwendung von Rollenketten kann durch
diese in einfacher Weise die seitliche Führung der Bandsegmente erfolgen.

Eine sehr vorteilhafte und erfinderische Weiterbildung
des erfindungsgemäßen Plattenfilters besteht darin, daß
die Umlenkrollen für das Filterband jeweils in einem Abstand von den Filterplatten angeordnet sind, der wenigstens annähernd ebenso groß ist, wie die Länge der
Filterplatten in Filterbandlaufrichtung.

Wird ein endloses Filterband bekannter Bauart um eine
Station weiterbewegt, so wird nach dem Überfahren der
Umlenkrollen die Bandoberseite zur Bandunterseite.
Dies hat den erheblichen Nachteil, daß die vorher ausfiltrierten Trübeteilchen mit dem Produkt in die
sterile Seite des Plattenfilters geschwemmt werden.
Auch wenn man zur Vermeidung dieses Effektes eine
Station entsprechend vollständig überfährt, besteht
trotzdem die Gefahr, daß die Trübeteilchen von der
frei hängenden Unterseite des Bandes während des Überfahrens der Station abfallen und damit ebenfalls auf
die sterile Seite gelangen.

Durch die erfindungsgemäße Verlängerung bzw. Vergrößerung
des Abstandes der Umlenkrollen von den Filterplatten
kann bei einem entsprechenden Verfahren der Bandsegmente
der Filterkuchen abgeworfen werden und zwar ohne daß die
Gefahr besteht, daß Trübeteilchen von der Bandunterseite
auf die sterile Seite gelangen können. In diesem Falle
fahren die Bandsegmente nach dem Abwurf des Filterkuchens
wieder in die Ausgangsstellung zurück. Bei der Filtrierung
von Produkten hingegen, bei denen die Sterilität keine
Rolle spielt, können die Bandsegmente hingegen in gleicher
Richtung weiter verfahren werden. Durch die erfindungsgemäße Ausgestaltung ist somit der Plattenfilter sowohl zum Filtrieren von sterilen Produkten als auch von nichtsterilen Produkten in gleicher Weise geeignet.

Nachfolgend ist anhand der Zeichnung ein Ausführungsbeispiel der Erfindung, aus dem weitere erfindungsgemäße
Merkmale hervorgehen, prinzipmäßig beschrieben.

Es zeigt:

Fig. 1          Eine Draufsicht auf ein Bandsegment;

Fig. 2          Eine teilweise Seitenansicht eines Plattenfilters in vereinfachter Darstellung mit
                geöffneten Filterplatten.

In einem nicht dargestellten Maschinengestell sind mehrere
übereinander liegende Filterplatten 1 angeordnet. Statt
einem vertikalen Aufbau können die Filterplatten jedoch
im Rahmen der Erfindung selbstverständlich auch vertikal
hintereinander liegen. Die nicht dargestellte Preßeinrichtung weist in bekannter Weise einen oberen und einen
unteren Deckel auf, zwischen denen die Filterplatten zusammengepresst werden. Jeweils zwischen zwei Filterplatten
1 läuft ein endloses Filterband 2 um, das über Umlenkrollen 3 entsprechend umgelenkt wird.

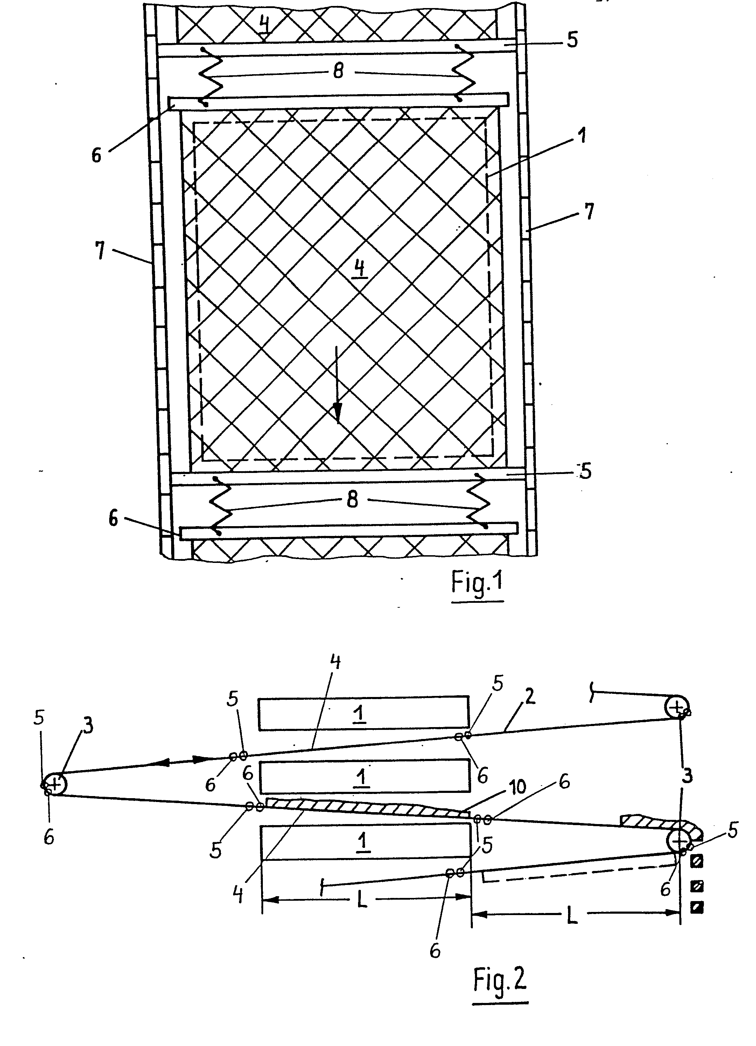

Das Filterband 2 besteht nun, wie insbesondere aus der
Fig. 1 ersichtlich ist, aus einer Vielzahl von einzelnen
Bandsegmenten 4. Jeweils das vordere Ende eines Bandsegmentes ist in einen Zugstab 5 eingehängt und das
hintere Ende ist mit einem Querstab 6 verbunden. Das
Ende jedes Zugstabes 5 ist jeweils mit einem Zugmittel
verbunden, das auf jeder Längsseite des Bandsegmentes 4
angeordnet ist und im dargestellen Falle eine nur prinzipmäßig dargestellte Rollenkette 7 ist. Der hintere Querstab 6 ist in Bandlaufrichtung lose in den Rollenketten
geführt. Zum Spannen des Bandsegmentes 4 dienen Federn 8,
welche mit einem Ende jeweils an dem Querstab 6 eingehängt sind. Werden nun die anderen Enden der Federn 8
in eine Spanneinrichtung eingehängt, welche wiederum fest
mit den Rollenketten als Zugmittel verbunden ist, dann
wird das Bandsegment 4 auf einfache Weise gespannt. Als
Spanneinrichtung kann ein gesonderter Querstab dienen.
Im allgemeinen wird man jedoch zur Vereinfachung hierfür
den Zugstab 5 des nächst folgenden Bandsegmentes verwenden.

Die Einleitung der Antriebskraft für das Bandsegment 4
erfolgt damit über den Zugstab 5. Aus diesem Grunde
wirken die Zugkräfte, die an einem Segment entstehen.
Diese sind so gering, daß keine Längung der Bandsegmente
4 aufgrund von Transportkräften entstehen kann.

Die Länge jedes Bandsegmentes 4 und dessen Breite sind
so gewählt, daß die Rollenketten, der Zugstab 5 und
der Querstab 6 jeweils außerhalb der in der Fig. 1 gestrichelt dargestellten Filterplatte 1 liegen.

Aus der Fig. 2 ist ersichtlich, daß die Umlenkrollen 3
in einem Abstand L jeweils von den Filterplatten 1 angeordnet sind, der mindestens ebenso groß ist wie die
Länge der Filterplatten. Wie ersichtlich, werden auf diese
Weise Filterkuchen 10 sicher an den Umlenkrollen 3 abgeworfen, ohne daß die Bandunterseite durch die Verschiebung auf die sterile Seite der nächst folgenden Filterplatte 1 gelangt. Statt Umlenkrollen 3 können im Rahmen
der Erfindung selbstverständlich auch jede andere Art
von Umlenkeinheiten verwendet werden. Maßgeblich sind
lediglich die angegebenen Längenverhältnisse.

Durch die erfindungsgemäße Einhängung der Bandsegmente
4 in die Zugstäbe 5 und die Querstäbe 6 und den seitlichen
Antrieb über das Zugmittel, z.B. die Rollenkette 7 können
im Bedarfsfalle die Bandsegmente 4 auch seitlich gespannt
werden. Dies kann z.B. durch in den Bandsegmenten in
deren seitlich aus den Filterplatte 1 herausragenden
Teilen eingehängte Federn erfolgen, die mit ihren anderen
Enden an dem Zugmittel 7 befestigt sind.

Anmelder:
=========


Grau Feinwerktechnik

GmbH & Co.

7926 Böhmenkirch


P A T E N T A N S P R Ü C H E
================================


1) Plattenfilter mit einer Vielzahl von über eine Preßeinrichtung zusammenpressbaren und Filterkammern aufweisenden Filterplatten, zwischen denen ein
   Filterband hindurchgeführt und über Umlenkrollen umgelenkt ist, wobei die Filterplatten durch Öffnen der
   Preßeinrichtung zum Abtransport des Filterkuchens
   auf Abstand bringbar sind
   d a d u r c h   g e k e n n z e i c h n e t ,   daß
   das Filterband (2) in eine Vielzahl von einzelnen miteinander verbundenen Bandsegmenten (4) aufgeteilt ist, deren Abmessungen in Länge und Breite wenigstens annähernd so groß sind wie die der Filterplatte (1) und
daß wenigstens auf einer Längsseite des Filterbandes
(2) ein mit Bandsegmenten (4) verbundenes angetriebenes
Zugmittel (7) angeordnet ist.

2) Plattenfilter nach Anspruch 1

d a d u r c h   g e k e n n z e i c h n e t,  daß
an beiden Längsseiten des Filterbandes (2) jeweils mit
den Bandsegmenten (4) verbundene Zugmittel (7) angeordnet sind.

3) Plattenfilter nach Anspruch 2

d a d u r c h   g e k e n n z e i c h n e t,  daß
die Zugmittel (7) durch Querstäbe (5) miteinander verbunden sind.

4) Plattenfilter nach Anspruch 3

d a d u r c h   g e k e n n z e i c h n e t,  daß
die Querstäbe    Zugstäbe (5) für die Bandsegmente (4)
bilden, an denen diese eingehängt sind.

5) Plattenfilter nach Anspruch 4

d a d u r c h   g e k e n n z e i c h n e t,  daß
die Zugstäbe (5) jeweils an den vorderen Enden der Bandsegmente (4) - bezogen auf die Filterbandlaufrichtung -
eingehängt sind und die hinteren Enden der Bandsegmente jeweils federnd gespannt sind.

6) Plattenfilter nach Anspruch 5

   d a d u r c h   g e k e n n z e i c h n e t,  daß
   die hinteren Enden der Bandsegmente (4) jeweils an
   einem Querstab (6) befestigt sind, welcher über
   Federn (8) jeweils an einer mit den Zugmitteln verbundenen Spanneinrichtung (5) eingehängt ist.

7) Plattenfilter nach Anspruch 6

   d a d u r c h   g e k e n n z e i c h n e t,  daß
   die Spanneinrichtung jeweils der Zugstab (5) des nachfolgenden Bandsegmentes (4) ist.

8) Plattenfilter nach einem der Ansprüche 1 - 7

   d a d u r c h   g e k e n n z e i c h n e t,  daß
   die Zugmittel als Seile, Ketten, Rollenketten (7) oder
   dgl. ausgebildet sind.

9) Plattenfilter nach Anspruch 8

   d a d u r c h   g e k e n n z e i c h n e t,  daß
   Rollenketten die seitlichen Führungen der Bandsegmente
   (4) bilden.

**0097856**

10) Plattenfilter nach einem der Ansprüche 1 - 9
    d a d u r c h   g e k e n n z e i c h n e t, daß
    die Umlenkrollen (3) für das Filterband (2) jeweils
    in einem Abstand (L) von den Filterplatten (1) angeordnet sind, der wenigstens annähernd ebenso groß
    ist, wie die Länge der Filterplatten (1) in Filter-
    bandlaufrichtung.

**Fig.1**

**Fig.2**

0097856

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 423 427 (GENE HIRS)<br><br>* Seite 2, linke Spalte, Zeilen 53-58, rechte Spalte, Zeilen 1-37 *<br><br>--- | 1-4,8-10 | B 01 D 25/12<br>B 01 D 29/02 |
| Y,D | DE-A-2 421 781 (EBERHARD HOESCH)<br>* Seite 6, Zeilen 13-24; Seite 7, Zeilen 1-13 *<br><br>--- | 1 | |
| A | US-A-3 965 011 (JOHN A. SHEAFFER)<br><br>--- | | |
| A | US-A-3 840 122 (J.R. MYERS)<br><br>--- | | |
| A | US-A-4 219 425 (TAKUJI YOSHIDA)<br><br>----- | | **RECHERCHIERTE SACHGEBIETE (Int. Cl. ³)**<br><br>B 01 D |

Der vorliegende Recherchenbericht wurde für alle Patentansprüche erstellt.

| Recherchenort<br>DEN HAAG | Abschlußdatum der Recherche<br>23-09-1983 | Prüfer<br>DE PAEPE P.F.J. |
|---|---|---|